# EUROPEAN PATENT SPECIFICATION

(11) **EP 2 985 808 B1**
(45) Date of publication and mention of the grant of the patent: **17.02.2021**
(21) Application number: 15180827.6
(22) Date of filing: 12.08.2015
(51) Int. Cl.: H01M 2/02, H01M 2/06, H01M 2/30

(54) **BATTERY TERMINAL PIN CONNECTION SYSTEM AND ITS MANUFACTURING**
TERMINALVERBINDUNGSSTAB FÜR BATTERIE UND DESSEN HERSTELLUNGSVERFAHREN
TERMINAL DE BATTERIE ET PROCEDE POUR SA PRODUCTION

(30) Priority: 13.08.2014 KR 20140104862
(43) Date of publication of application: 17.02.2016
(73) Proprietor: Samsung SDI Co., Ltd., Yongin-si, Gyeonggi-do 17084 (KR)
(72) Inventor: Lee, Jongha, Gyeonggi-do (KR); Yong, Junsun, Gyeonggi-do (KR)
(74) Representative: Taor, Simon Edward William

(56) References cited:
- EP-A1- 2 230 705
- EP-A1- 2 388 844
- EP-A2- 2 495 784
- US-A1- 2014 242 440

## Description

One or more exemplary embodiments of the present invention relate to a secondary battery.

With the development of wireless Internet or communication technologies, battery-operated portable electronic devices which do not use a separate power supply have generally been used. Among the portable electronic devices, a portable computer is small in size and is easy to carry, and thus the portable computer is widely used for business or personal purposes due to its good mobility. A secondary battery may be employed in the portable computer so that the portable computer can be used anywhere, regardless of availability of power supplies. The secondary battery may include a plurality of unit batteries that may be repeatedly charged and discharged to supply enough power.

One or more exemplary embodiments of the present invention include a structure of a secondary battery.

EP2388844 discloses a rechargeable battery that includes an electrode assembly formed by winding positive and negative electrodes formed at both sides of a separator together with the separator, a case housing the electrode assembly therein, a cap plate sealing an opening at one side of the case, an electrode terminal formed in a terminal hole of the cap plate, and a lead tab connecting the electrode terminal and the electrode assembly in the case.

Additional aspects will be set forth in part in the description which follows and, in part, will be apparent from the description, or may be learned by practice of the presented exemplary embodiments.

The essential technical features of the present invention are explicitly defined in the wording of the independent claims 1 and 10 on file. Further features of the claimed invention are explicitly defined in the wordings of dependent claims 2-9 on file.

According to an aspect of the invention, there is provided a secondary battery as set out in claim 1. Preferred features are set out in claims 2 to : 9.

According to an aspect of the invention, there is provided a method of manufacturing a secondary battery as set out in claim 10.

These and/or other aspects will become apparent and more readily appreciated from the following description of the exemplary embodiments, taken in conjunction with the accompanying drawings in which:
FIG. 1 is a schematic perspective view of a secondary battery according to an exemplary embodiment of the present invention;
FIG. 2 is a schematic exploded perspective view of the secondary battery of FIG. 1;
FIG. 3 is a schematic bottom view of a cap assembly of the secondary battery of FIG. 1;
FIG. 4 is a schematic cross-sectional view of a portion of a cross-section taken along a line VI-VI' of FIG. 3;
FIGS. 5 through 7 are schematic perspective views of enlarged portions of a terminal plate of the secondary battery of FIG. 1.

As the invention allows for various changes and numerous exemplary embodiments, particular exemplary embodiments will be illustrated in the drawings and described in detail in the written description. However, this is not intended to limit the present invention to particular modes of practice, and it is to be appreciated that all changes, equivalents, and substitutes that do not depart from the spirit and technical scope of the present invention are encompassed in the present invention. In the description of the present invention, certain detailed explanations of the related art are omitted when it is deemed that they may unnecessarily obscure the essence of the invention.

Hereinafter, the present invention will be described in detail by explaining preferred exemplary embodiments of the invention with reference to the attached drawings. Like reference numerals in the drawings denote like elements, and repeated descriptions thereof will be omitted.

It will be understood that although the terms "first", "second", etc. may be used herein to describe various components, these components should not be limited by these terms. These components are only used to distinguish one component from another.

As used herein, the singular forms "a", "an", and "the" are intended to include the plural forms as well, unless the context clearly indicates otherwise.

It will be further understood that the terms "comprises" and/or "comprising" used herein specify the presence of stated features or components, but do not preclude the presence or addition of one or more other features or components.

It will be understood that when a layer, region, or component is referred to as being "formed on" another layer, region, or component, it can be directly or indirectly formed on the other layer, region, or component. That is, for example, intervening layers, regions, or components may be present.

In the following examples, the x-axis, the y-axis and the z-axis are not limited to three axes of the rectangular coordinate system, and may be interpreted in a broader sense. For example, the x-axis, the y-axis, and the z-axis may be perpendicular to one another, or may represent different directions that are not perpendicular to one another.

Sizes of components in the drawings may be exaggerated for convenience of explanation. In other words, since sizes and thicknesses of components in the drawings are arbitrarily illustrated for convenience of explanation, the following exemplary embodiments are not limited thereto.

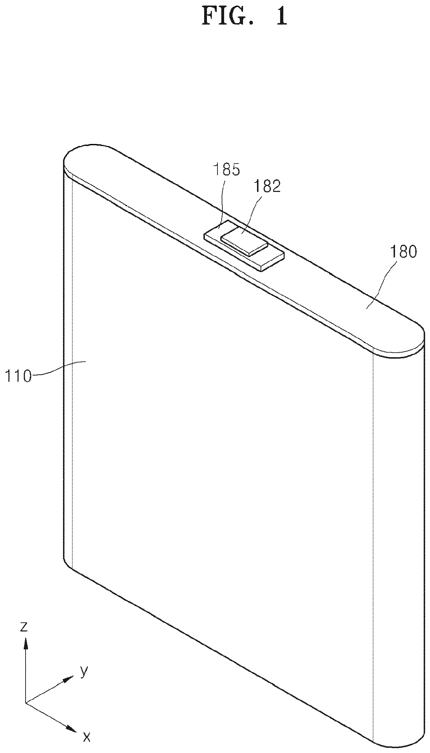

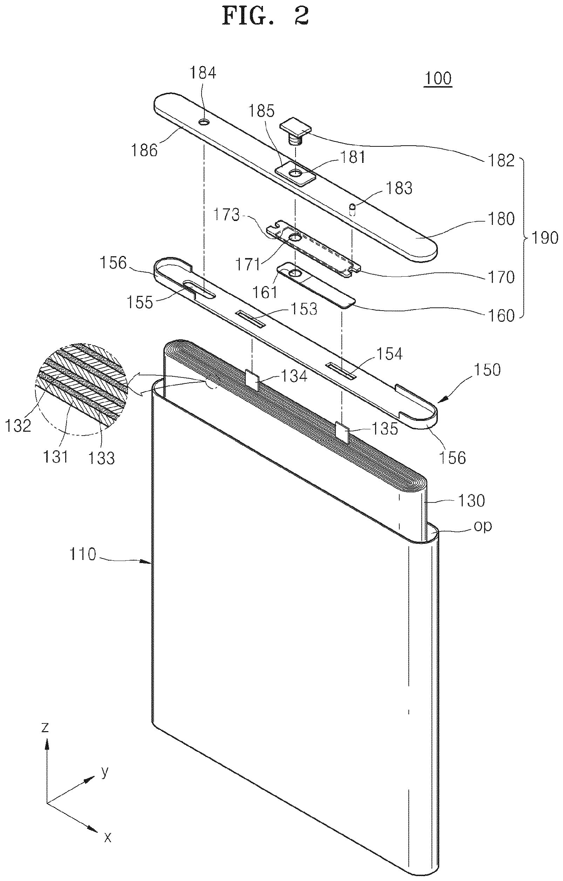

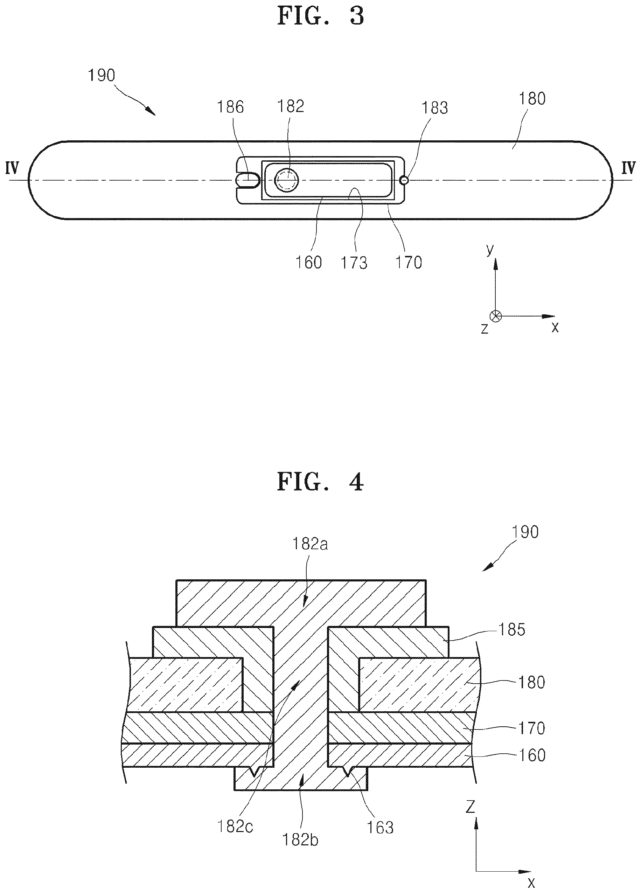

FIG. 1 is a schematic perspective view of a secondary battery 100 according to an exemplary embodiment of the present invention, and FIG. 2 is a schematic exploded perspective view of the secondary battery 100 of FIG. 1. FIG. 3 is a schematic bottom view of a cap assembly 190 of the secondary battery 100 of FIG. 1.

Referring to FIGS. 1 through 3, the secondary battery 100 may include a can 110, an electrode assembly 130, an insulating case 150, and a cap assembly 190. The secondary battery 100 may be rechargeable and may be, for example, a lithium-ion battery.

The can 110 has an opening OP on one side thereof and has an internal space surrounded by a side wall. The electrode assembly 130 is inserted through the opening OP, and thus the can 110 may house the electrode assembly 130 therein.

The can 110 has a shape similar to a hexahedron, and an upper portion thereof is open. The can 110 may be formed of aluminum (Al) or Al alloy. After the electrode assembly 130 is inserted into the can 110 via the opening OP, the opening OP may be sealed by the cap assembly 190. The cap assembly 190 includes a terminal plate 160, an insulating plate 170, a cap plate 180, and electrode pin 182 which is inserted into the terminal plate 160, the insulating plate 170, and the cap plate 180. A detailed structure of the cap assembly 190 will be described later.

The cap plate 180 may be formed of metallic materials such as Al or Al alloy, which is the same as the can 110. A portion on which the cap plate 180 and the can 110 contact is coupled by laser welding, and thus, internal airtight may be maintained.

The electrode assembly 130 may include a first electrode layer 131, a second electrode layer 132, and a separator 133 disposed between the first electrode layer 131 and the second electrode layer 132. The electrode assembly 130 may have a structure in which a plurality of first electrode layers 131, second electrode layers 132 and separators 133 are stacked or a jelly-roll structure in which the first electrode layer 131, the second electrode layer 132, and the separator 133 are wrapped. Hereinafter, however, a case where the electrode assembly 130 has the jelly-roll structure in which the first electrode layer 131, the second electrode layer 132, and the separator 133 are wrapped will be described in detail for convenience.

The first electrode layer 131 may be any one of an anode film or a cathode film. When the first electrode layer 131 is an anode film, the second electrode layer 132 may be a cathode film. On the contrary, when the first electrode layer 131 is a cathode film, the second electrode layer 132 may be an anode film. That is, the first electrode layer 131 and the second electrode layer 132 have polarities which are electrically different from each other, and polarities thereof are not limited to a certain polarity. Hereinafter, however, a case where the first electrode layer 131 is an anode film, the second electrode layer 132 is a cathode film will be described for convenience.

The first electrode layer 131 may include a first metal collector (not shown) and a first active material portion (not shown) on which a first active material (not shown) is spread on an entire surface of the first metal collector. Likewise, the second electrode layer 132 may include a second metal collector (not shown) and a second active material portion (not shown) on which a second active material (not shown) is spread on an entire surface of the second metal collector.

The first electrode layer 131 is the anode film, the first metal collector is an anode collector, and the first active material portion may be an anode active material portion. The second electrode layer 132 is the cathode film, the second metal collector is a cathode collector, and the second active material portion may be a cathode active material portion. Materials and structures of the anode collector, the anode active material portion, the cathode collector, and the cathode active material portion may include well-known materials that are used in ordinary secondary batteries, and thus, descriptions regarding detailed materials and structures of the anode collector, the anode active material portion, the cathode collector, and the cathode active material portion will be omitted.

The separator 133 may be a porous polymer film or may be woven fabrics or nonwoven fabrics including polymer fibers. Also, the separator 133 may include ceramic particles and may be formed of a polymer solid electrolyte. For example, the separator 133 may be formed of polyethylene (PE), polypropylene (PP), etc. The separator 133 may be used as a separate film or formed as a non-conductive porous layer on the first electrode layer 131 or the second electrode layer 132.

The separator 133 is formed to electrically separate the first electrode layer 131 and the second electrode layer 132, and it is unnecessary to form a shape of the separator 133 to be identical to a shape of the first electrode layer 131 or the second electrode layer 132.

Electrode plates 134 and 135 may have a first electrode plate 134 and a second electrode plate 135 which have different properties. The electrode plates 134 and 135 are installed to electrically connect the electrode assembly 130 to an external device. The first electrode plate 134 is electrically connected to the first electrode layer 131, thus having an anode. The second electrode plate 135 is electrically connected to the second electrode layer 132, thus having a cathode.

The insulating case 150 is arranged between the electrode assembly 130 and the cap assembly 190 and may function to electrically insulate the electrode assembly 130 and the cap assembly 190 from each other. The insulating case 150 is disposed inside the opening OP of the can 110 which houses the electrode assembly 130.

Also, supports 156 may be formed at both ends of the insulating case 150. The insulating case 150 may be stably disposed in the can 110 by using the supports 156. FIG. 2 shows that the supports 156 are formed at the ends of the insulating case 150, but may extend along a circumference of the insulating case 150.

As described above, since the insulating case 150 is an insulator which electrically insulates the electrode assembly 130 and the cap assembly 190 from each other, the insulating case 150 may be formed of insulative polymer resins. For example, the insulative polymer resins may be PP, PE, polyimide (PI), polyphenylenesulfide (PPS), polyethersulfone (PES), polyphenyleneoxide (PPO), etc.

The cap assembly 190 may include a cap plate 180, an insulating plate 170, a terminal plate 160, and an electrode pin 182.

The cap plate 180 seals the opening OP of the can 110 and protects the electrode assembly 130 installed inside the can 110. A shape of the cap plate 180 may be the same as that of the opening OP of the can 110.

The electrode pin 182 may be arranged on the cap plate 180. In this case, a gasket 185 may be disposed between the electrode pin 182 and the cap plate 180 in order to prevent a short of the electrode pin 182 and the cap plate 180. The gasket 185 is formed of an insulative material and prevents an electrical short between the electrode pin 182 and the cap plate 180.

The electrode pin 182 may be arranged at a center of the cap plate 180. Based on the electrode pin 182, an anchor portion 183 is disposed on one end of the cap plate 180, and an electrolyte injection hole 184 may be disposed in the other end of the cap plate 180.

The electrode pin 182 may be electrically connected to the second electrode plate 135 via a first terminal through hole 181 arranged at the center of the cap plate 180. That is, the first electrode plate 134 is electrically connected to the cap plate 180, and the second electrode plate 135 may be electrically connected to the electrode pin 182. Since the first electrode plate 134 and the second electrode plate 135 have different polarities, the cap plate 180 and the electrode pin 182 which are respectively connected to the first electrode plate 134 and the second electrode plate 135 also have different polarities. For example, the cap plate 180 may have a positive polarity, and the electrode pin 182 may have a negative polarity. Therefore, the gasket 185 is disposed between the cap plate 180 and the electrode pin 182 in order to prevent the short thereof, and accordingly, the short of the cap plate 180 and the electrode pin 182 is prevented.

The electrolyte injection hole 184 which is used to inject an electrolyte into the sealed can 110 may be formed and may be sealed by a sealing cap (not shown) after the electrolyte is injected.

Also, the terminal plate 160 and the insulating plate 170 may be disposed on a lower surface of the cap plate 180 (i.e. a surface facing towards the electrode assembly). The insulating plate 170 may be disposed on the lower surface of the cap plate 180 and may be formed of an insulative material which is the same as in the gasket 185.

A second terminal through hole 171, in which the electrode pin 182 is inserted, is formed in a location corresponding to the first terminal through hole 181 of the cap plate 180. An accommodation groove 173 having a size corresponding to a size of the terminal plate 160 is formed in a lower surface of the insulating plate 170 in order to accommodate the terminal plate 160.

The terminal plate 160 is formed of a conductive material such as nickel (Ni) and is coupled to the lower surface of the insulating plate 170. As a result, an electrical path between the electrode pin 182 and the second electrode plate 135 may be formed. One side of the terminal plate 160 electrically contacts the second electrode plate 135, and the other side of the terminal plate 160 may electrically contact the electrode pin 182. In other words, a third terminal through hole 161, in which the electrode pin 182 is inserted, is formed in a location corresponding to the first terminal through hole 181 of the cap plate 180, and since the electrode pin 182 is insulated by the gasket 185 and is coupled via the first terminal through hole 181 of the cap plate 180, the terminal plate 160 is electrically insulated from the cap plate 180 and then electrically connected to the electrode pin 182.

The cap plate 180 may include an anchor portion 183 protruding toward the lower surface of the cap plate 180 so as to fix the terminal plate 160 and the insulating plate 170. Since the anchor portion 183 fixes the terminal plate 160 and the insulating plate 170, an electrical short may be prevented.

FIG. 4 is a schematic cross-sectional view of a portion of a cross-section taken along a line VI-VI' of FIG. 3. FIG. 4 shows an enlarged cross-section of the cap assembly 190 including the terminal plate 160, the insulating plate 170, and the cap plate 180, which are arranged based on the electrode pin 182.

Referring to FIG. 4, the cap assembly 190 includes the terminal plate 160, the insulating plate 170, the cap plate 180, and the electrode pin 182. The cap plate 180 has the first terminal through hole 181, the insulating plate 170 has the second terminal through hole 171, and the terminal plate 160 has the third terminal through hole 161. The electrode pin 182 is arranged to be inserted into the first terminal through hole 181, the second terminal through hole 171, and the third terminal through hole 161.

A protrusion 163 may be formed on a neighboring portion of the third terminal through hole 161 of the terminal plate 160 (e.g. on a portion of the terminal plate 160 adjacent or proximate the third terminal through hole 161). Since one surface of the terminal plate 160 contacts the insulating plate 170, the protrusion 163 may be formed on the other surface of the terminal plate 160. That is, the protrusion 163 may be formed on a surface that is opposite to the surface on which the terminal plate 160 contacts the insulating plate 170.

A shown in FIG. 4, the electrode pin 182, which is inserted into the first terminal through hole 181, the second terminal through hole 171, and the third terminal through hole 161, includes an upper portion 182a disposed on the upper surface of the cap plate 180 (i.e. a surface facing away from the electrode assembly), a lower portion 182b disposed on the lower surface of the terminal plate 160 (i.e. a surface facing towards the electrode assembly), and a connecting portion 182c which connects the upper portion 182a and the lower portion 182b. The upper portion 182a of the electrode pin 182 contacts the upper surface of the cap plate 180, and the lower portion 182b of the electrode pin 182 may contact the lower surface of the terminal plate 160. The fact that the upper portion 182a of the electrode pin 182 contacts the upper surface of the cap plate 180 means that the upper portion 182a of the electrode pin 182 contacts the upper surface of the cap plate 180 by interposing the gasket 185, which is arranged between the cap plate 180 and the electrode pin 182, between the upper portion 182a of the electrode pin 182 and the upper surface of the cap plate 180. As described above, since the cap plate 180 and the electrode pin 182 are formed of metallic materials and have different polarities, the gasket 185 is arranged to prevent the occurrence of the electrical short on the surface on which the upper portion 182a of the electrode pin 182 contacts the upper surface of the cap plate 180.

In this case, the protrusion 163 may be formed on the lower surface of the terminal plate 160, at a location where the lower surface of the terminal plate 160 contacts the lower portion 182b of the electrode pin 182. Therefore, the lower portion 182b of the electrode pin 182 is arranged to interlock with the protrusion 163 of the terminal plate 160. Adhesion between the lower portion 182b of the electrode pin 182 and the terminal plate 160 may be greatly improved due to the protrusion 163 formed on the terminal plate 160. A contact resistance problem between the surface of the lower portion 182b of the electrode pin 182 which contacts the lower surface of the terminal plate 160 may be solved, thereby improving the reliability of the secondary battery.

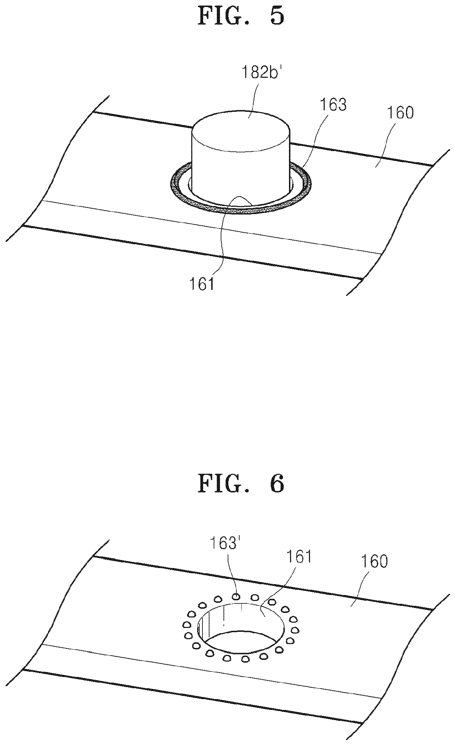

FIGS. 5 through 7 are schematic perspective views of enlarged portions of the terminal plate 160 of the secondary battery 100 of FIG. 1.

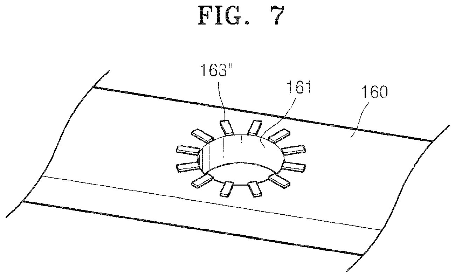

Referring to FIG. 5, the protrusion 163 formed on the lower surface of the terminal plate 160 may be circular shaped and surround the third terminal through hole 161 of the terminal plate 160. Also, referring to FIG. 6, the protrusion 163 formed on the lower surface of the terminal plate 160 may include protrusions 163' surrounding a neighboring portion of the third terminal through hole 161 of the terminal plate 160 (e.g. adjacent the third terminal through hole 161 and located around the third terminal through hole 161). As shown in FIG. 7, protrusions 163" formed on the lower surface of the terminal plate 160 may be radially arranged based on the third terminal through hole 161 of the terminal plate 160. In other words, the protrusions 163" may be arranged around the circumference of terminal through hole 161 and may extend in a radial direction.

Due to the protrusion 163 formed on the terminal plate 160, adhesion between the lower portion 182b of the electrode pin 182 and the terminal plate 160 may be greatly improved, and a contact resistance problem on the surface on which the lower portion 182b of the electrode pin 182 and the terminal plate 160 may be solved, thereby improving the reliability of the secondary battery.

The secondary battery has been mainly described, but embodiments of the present invention are not limited thereto. For example, a method of manufacturing a secondary battery is also included in the scope of the present invention.

Referring to FIGS. 1 through 7, a can 110, which has a shape similar to a hexahedron and an opening OP on a side of the can 110, is formed. The can 110 may be formed of metallic materials such as Al or Al alloy in order to secure enough strength.

Then, an electrode assembly 130 may be housed in the can 110. The electrode assembly 130 may include a first electrode layer 131, a second electrode layer 132, and a separator 133 disposed between the first electrode layer 131 and the second electrode layer 132. The electrode assembly 130 may have a structure in which first multiple electrode layers 131, second electrode layers 132 and separators 133 are stacked or a jelly-roll structure in which the first electrode layer 131, the second electrode layer 132, and the separator 133 are wrapped.

A cap assembly 190 may be formed and may include a cap plate 180, an insulating plate 170, a terminal plate 160, and an electrode pin 182. While the cap assembly 190 is formed, the insulating plate 170 is disposed on a lower surface of the cap plate 180, and the terminal plate 160 is disposed on a lower surface of the insulating plate 170. Then, the electrode pin 182 may be inserted into terminal through holes 181, 171, and 161 respectively formed in the cap plate 180, the insulating plate 170, and the terminal plate 160.

Referring to FIG. 5, the electrode pin 182 is formed of metallic materials which have ductility and malleability. An end of the electrode pin 182 which is inserted into the terminal plate 160 by using the malleability of the metallic materials may be formed by a spinning method. An end portion 182b' of the electrode pin 182 which is formed by the spinning method may contact a surface disposed on a neighboring portion of the terminal through hole 161 of the terminal plate 160.

In this case, a protrusion 163 is formed on a surface of the terminal plate 160, at a location where the end portion 182b' of the electrode pin 182 contacts the surface of the terminal plate 160. The protrusion 163 is formed on the surface of the terminal plate 160, and the surface is opposite to a surface of the terminal plate 160 which contacts the insulating plate 170. The protrusion 163 may be formed on the neighboring portion of the terminal through hole 161 of the terminal plate 160, and the end portion 182b' of the electrode pin 182, which extends during spin coating due to the malleability of the metallic materials and contacts the neighboring portion of the terminal through hole 161 of the terminal plate 160, may interlock with the protrusion 163.

After the cap assembly 190 is formed, the opening OP of the can 110 may be sealed by using the cap assembly 190. A part on which the cap assembly 190 and the can 110 contact is sealed by laser welding, and thus, internal airtight may be maintained.

Due to the protrusion 163 formed on the terminal plate 160 of the secondary battery 110 which is manufactured by the manufacturing method, the adhesion between the lower portion 182b of the electrode pin 182 and the terminal plate 160 may be improved, and a contact resistance problem on the surface on which the lower portion 182b of the electrode pin 182 and the terminal plate 160 may be solved, thereby improving the reliability of the secondary battery.

As discussed, embodiments of the invention can provide a secondary battery comprising: an electrode assembly comprising a first electrode plate, a second electrode plate; a can arranged to house the electrode assembly and comprising an opening at one end of the can; a cap plate arranged to seal the opening of the can and comprising a first terminal through hole; an insulating plate disposed on a surface of the cap plate facing towards the electrode assembly and comprising a second terminal through hole; and a terminal plate disposed on a surface of the insulating plate facing towards the electrode assembly and comprising a third terminal through hole and a protrusion formed adjacent the third terminal through hole.

In some embodiments, the first electrode plate is electrically connected to the cap plate, and the second electrode plate is electrically connected to the electrode pin via the terminal plate.

In some embodiments, the secondary battery of further comprises an insulating case arranged between the electrode assembly and the cap plate to electrically insulate the electrode assembly and the cap plate from each other.

In some embodiments, the protrusion is circular shaped and surrounds the third terminal through hole.

In some embodiments, the secondary battery comprises a plurality of protrusions surrounding the third terminal through hole, e.g. arranged around the third terminal through hole in a circumferential direction. In some embodiments, the protrusions are radially arranged based on the third terminal through hole.

As described above, according to the one or more of the above exemplary embodiments of the present invention, a secondary battery having improved durability and stability may be embodied. However, the scope of the present invention is not limited thereto.

It should be understood that the exemplary exemplary embodiments described therein should be considered in a descriptive sense only and not for purposes of limitation. Descriptions of features or aspects within each exemplary embodiment should typically be considered as available for other similar features or aspects in other exemplary embodiments.

While one or more exemplary embodiments of the present invention have been described with reference to the figures, it will be understood by those of ordinary skill in the art that various changes in form and details may be made therein without departing from the scope of the present invention as defined by the following claims.

## Claims

1. A secondary battery comprising:
an electrode assembly (130) comprising a first electrode plate (134), a second electrode plate (135);
a can (110) arranged to house the electrode assembly and comprising an opening at one end of the can;
a cap assembly (190) comprising a cap plate (180), an insulating plate (170), and a terminal plate (160), wherein:
the cap plate being arranged to seal the opening of the can, the cap plate comprising a first terminal through hole (181);
the insulating plate is disposed on a surface of the cap plate facing towards the electrode assembly and comprises a second terminal through hole (171); and
the terminal plate is disposed on a surface of the insulating plate facing towards the electrode assembly and comprises a third terminal through hole (161) and a protrusion (163) formed adjacent the third terminal through hole, wherein the protrusion is formed on the terminal plate on a surface facing towards the electrode assembly; the secondary battery further comprising:
an electrode pin (182) comprising a portion disposed on a surface of the cap plate facing away from the electrode assembly and a portion inserted into the first, second and third terminal through holes, wherein a portion of the electrode pin interlocks with the protrusion of the terminal plate.

2. The secondary battery of claim 1, wherein the electrode pin comprises a first portion disposed on the surface of the cap plate facing away from the electrode assembly, a second portion disposed on surface of the terminal plate facing away from the electrode assembly, and a connecting portion connecting the first portion and the second portion.

3. The secondary battery of claim 2, wherein the second portion of the electrode pin interlocks with the protrusion of the terminal plate.

4. The secondary battery of any one of claims 1 to 3, wherein the protrusion is circular shaped and surrounds the third terminal through hole.

5. The secondary battery of any one of claims 1 to 4, comprising a plurality of protrusions surrounding the third terminal through hole.

6. The secondary battery of claim 5, wherein the protrusions are radially arranged based on the third terminal through hole.

7. The secondary battery of any one of claims 1 to 6, wherein the first electrode plate is electrically connected to the cap plate, and the second electrode plate is electrically connected to the electrode pin via the terminal plate.

8. The secondary battery of any one of claims 1 to 7, wherein the electrode assembly is inserted into the can via the opening.

9. The secondary battery of any one of claims 1 to 8, further comprising an insulating case arranged between the electrode assembly and the cap plate to electrically insulate the electrode assembly and the cap plate from each other.

10. A method of manufacturing a secondary battery, the method comprising:
housing an electrode assembly (130) inside a can (110), the electrode assembly comprising a first electrode plate (134) and a second electrode plate (135);
forming a cap assembly (190) by arranging a cap plate (180), an insulating plate (170) disposed on a surface of the cap plate facing towards the electrode assembly, and a terminal plate (160) disposed on a surface of the insulating plate facing towards the electrode assembly in a stack, wherein the cap plate comprises a first terminal through hole (181), the insulating plate (170) comprises a second terminal through hole (171), and the terminal plate comprises a third terminal through hole (161); and
sealing the can by using the cap plate,
wherein, in the forming, a protrusion is formed on a surface of the terminal plate facing towards the electrode assembly and disposed adjacent the third terminal through hole of the terminal plate;
further comprising inserting an electrode pin (182) into the first terminal through hole, the second terminal through hole, and the third terminal through hole so that a portion of the electrode pin is disposed on a surface of the cap plate facing away from the electrode assembly, a portion of the electrode pin is inserted into the first, second and third terminal through holes, and a portion of the electrode pin interlocks with the protrusion of the terminal plate.

## Patentansprüche

1. Sekundärbatterie, umfassend:
eine Elektrodenanordnung (130), die eine erste Elektrodenplatte (134) und eine zweite Elektrodenplatte (135) umfasst;
ein Gehäuse (110), das dazu angeordnet ist, die Elektrodenanordnung aufzunehmen, und eine Öffnung an einem Ende des Gehäuses umfasst;
eine Deckelanordnung (190), die eine Deckelplatte (180), eine Isolierplatte (170) und eine Anschlussplatte (160) umfasst, wobei:
die Deckelplatte dazu angeordnet ist, die Öffnung des Gehäuses dicht zu verschließen, wobei die Deckelplatte ein erstes Anschlussdurchgangsloch (181) umfasst;
die Isolierplatte auf einer der Elektrodenanordnung zugewandten Oberfläche der Deckelplatte angeordnet ist und ein zweites Anschlussdurchgangsloch (171) umfasst; und
die Anschlussplatte auf einer der Elektrodenanordnung zugewandten Oberfläche der Isolierplatte angeordnet ist und ein drittes Anschlussdurchgangsloch (161) und einen Vorsprung (163), der dem dritten Anschlussdurchgangsloch benachbart ausgebildet ist, umfasst, wobei der Vorsprung auf der Anschlussplatte auf einer der Elektrodenanordnung zugewandten Oberfläche ausgebildet ist; wobei die Sekundärbatterie ferner umfasst:
einen Elektrodenstift (182), der einen Abschnitt, der auf einer der Elektrodenanordnung abgewandten Oberfläche der Deckelplatte angeordnet ist, und einen Abschnitt, der in das erste, zweite und dritte Anschlussdurchgangsloch eingeführt ist, umfasst, wobei ein Abschnitt des Elektrodenstiftes mit dem Vorsprung der Anschlussplatte in Eingriff steht.

2. Sekundärbatterie nach Anspruch 1, wobei der Elektrodenstift einen ersten Abschnitt, der auf der der Elektrodenanordnung abgewandten Oberfläche der Deckelplatte angeordnet ist, einen zweiten Abschnitt, der auf der der Elektrodenanordnung abgewandten Oberfläche der Anschlussplatte angeordnet ist, und einen Verbindungsabschnitt, der den ersten Abschnitt und den zweiten Abschnitt verbindet, umfasst.

3. Sekundärbatterie nach Anspruch 2, wobei der zweite Abschnitt des Elektrodenstiftes mit dem Vorsprung der Anschlussplatte in Eingriff steht.

4. Sekundärbatterie nach einem der Ansprüche 1 bis 3, wobei der Vorsprung kreisförmig ist und das dritte Anschlussdurchgangsloch umgibt.

5. Sekundärbatterie nach einem der Ansprüche 1 bis 4, die eine Mehrzahl von Vorsprüngen umfasst, die das dritte Anschlussdurchgangsloch umgeben.

6. Sekundärbatterie nach Anspruch 5, wobei die Vorsprünge basierend auf dem dritten Anschlussdurchgangsloch radial angeordnet sind.

7. Sekundärbatterie nach einem der Ansprüche 1 bis 6, wobei die erste Elektrodenplatte elektrisch mit der Deckelplatte verbunden ist und die zweite Elektrodenplatte über die Anschlussplatte elektrisch mit dem Elektrodenstift verbunden ist.

8. Sekundärbatterie nach einem der Ansprüche 1 bis 7, wobei die Elektrodenanordnung über die Öffnung in das Gehäuse eingesetzt wird.

9. Sekundärbatterie nach einem der Ansprüche 1 bis 8, ferner umfassend eine Isolierummantelung, die zwischen der Elektrodenanordnung und der Deckelplatte angeordnet ist, um die Elektrodenanordnung und die Deckelplatte elektrisch voneinander zu isolieren.

10. Verfahren zur Herstellung einer Sekundärbatterie, wobei das Verfahren Folgendes umfasst:
Aufnehmen einer Elektrodenanordnung (130) im Inneren eines Gehäuses (110), wobei die Elektrodenanordnung eine erste Elektrodenplatte (134) und eine zweite Elektrodenplatte (135) umfasst;
Ausbilden einer Deckelanordnung (190) durch Anordnen einer Deckelplatte (180), einer Isolierplatte (170), die auf einer der Elektrodenanordnung zugewandten Oberfläche der Deckelplatte angeordnet ist, und einer Anschlussplatte (160), die auf einer der Elektrodenanordnung zugewandten Oberfläche der Isolierplatte angeordnet ist, in einem Stapel, wobei die Deckelplatte ein erstes Anschlussdurchgangsloch (181) umfasst, die Isolierplatte (170) ein zweites Anschlussdurchgangsloch (171) umfasst und die Anschlussplatte ein drittes Anschlussdurchgangsloch (161) umfasst; und
dichtes Verschließen des Gehäuses unter Verwendung der Deckelplatte,
wobei bei dem Ausbilden ein Vorsprung auf einer der Elektrodenanordnung zugewandten Oberfläche der Anschlussplatte ausgebildet und dem dritten Anschlussdurchgangsloch der Anschlussplatte benachbart angeordnet wird;
ferner umfassend ein Einführen eines Elektrodenstiftes (182) in das erste Anschlussdurchgangsloch, das zweite Anschlussdurchgangsloch und das dritte Anschlussdurchgangsloch, so dass ein Abschnitt des Elektrodenstiftes auf einer der Elektrodenanordnung abgewandten Oberfläche der Deckelplatte angeordnet ist, ein Abschnitt des Elektrodenstiftes in das erste, zweite und dritte Anschlussdurchgangsloch eingeführt ist und ein Abschnitt des Elektrodenstiftes mit dem Vorsprung der Anschlussplatte in Eingriff steht.

## Revendications

1. Batterie secondaire comprenant :
un ensemble d'électrodes (130) comprenant une première plaque d'électrode (134), une seconde plaque d'électrode (135) ;
une boîte (110) agencée pour loger l'ensemble d'électrodes et comprenant une ouverture au niveau d'une extrémité de la boîte ;
un ensemble de capuchon (190) comprenant une plaque de capuchon (180), une plaque isolante (170) et une plaque de borne (160), où :
la plaque de capuchon étant agencée pour sceller l'ouverture de la boîte, la plaque de capuchon comprenant un premier trou débouchant de borne (181) ;
la plaque isolante est disposée sur une surface de la plaque de capuchon orientée vers l'ensemble d'électrodes et comprend un deuxième trou débouchant de borne (171) ; et
la plaque de borne est disposée sur une surface de la plaque isolante orientée vers l'ensemble d'électrodes et comprend un troisième trou débouchant de borne (161) et une saillie (163) formée de manière adjacente au troisième trou débouchant de borne, où la saillie est formée sur la plaque de borne sur une surface orientée vers l'ensemble d'électrodes ; la batterie secondaire comprenant en outre :
une broche d'électrode (182) comprenant une partie disposée sur une surface de la plaque de capuchon orientée à l'opposé de l'ensemble d'électrodes et une partie insérée dans les premier, deuxième et troisième trous débouchants de borne, où une partie de la broche d'électrode se verrouille avec la saillie de la plaque de borne.

2. Batterie secondaire selon la revendication 1, dans laquelle la broche d'électrode comprenant une première partie disposée sur la surface de la plaque de capuchon orientée à l'opposé de l'ensemble d'électrodes, une seconde partie disposée sur la surface de la plaque de borne orientée à l'opposé de l'ensemble d'électrodes, et une partie de raccordement raccordant la première partie et la seconde partie.

3. Batterie secondaire selon la revendication 2, dans laquelle la seconde partie de la broche d'électrode se verrouille avec la saillie de la plaque de borne.

4. Batterie secondaire selon l'une quelconque des revendications 1 à 3, dans laquelle la saillie est de forme circulaire et entoure le troisième trou débouchant de borne.

5. Batterie secondaire selon l'une quelconque des revendications 1 à 4, comprenant une pluralité de saillies entourant le troisième trou débouchant de borne.

6. Batterie secondaire selon la revendication 5, dans laquelle les saillies sont radialement agencées sur la base du troisième trou débouchant de borne.

7. Batterie secondaire selon l'une quelconque des revendications 1 à 6, dans laquelle la première plaque d'électrode est électriquement raccordée à la plaque de capuchon, et la seconde plaque d'électrode est électriquement raccordée à la broche d'électrode via la plaque de borne.

8. Batterie secondaire selon l'une quelconque des revendications 1 à 7, dans laquelle l'ensemble d'électrodes est inséré dans la boîte, via l'ouverture.

9. Batterie secondaire selon l'une quelconque des revendications 1 à 8, comprenant en outre un boîtier isolant agencé entre l'ensemble d'électrodes et la plaque de capuchon afin d'isoler électriquement l'ensemble d'électrodes et la plaque de capuchon l'un de l'autre.

10. Procédé pour fabriquer une batterie secondaire, le procédé comprenant les étapes consistant à :
loger un ensemble d'électrodes (130) à l'intérieur d'une boîte (110), l'ensemble d'électrodes comprenant une première plaque d'électrode (134) et une seconde plaque d'électrode (135) ;
former un ensemble de capuchon (190) en agençant une plaque de capuchon (180), une plaque isolante (170) disposée sur une surface de la plaque de capuchon orientée vers l'ensemble d'électrodes, et une plaque de borne (160) disposée sur une surface de la plaque isolante orientée vers l'ensemble d'électrodes dans un empilement, où la plaque de capuchon comprend un premier trou débouchant de borne (181), la plaque isolante (170) comprend un deuxième trou débouchant de borne (171) et la plaque de borne comprend un troisième trou débouchant de borne (161) ; et
sceller la boîte en utilisant la plaque de capuchon,
dans lequel, lors du formage, une saillie est formée sur une surface de la plaque de borne orientée vers l'ensemble d'électrodes et disposée de manière adjacente au troisième trou débouchant de borne de la plaque de borne ;
comprenant en outre l'étape consistant à insérer une broche d'électrode (182) dans le premier trou débouchant de borne, le deuxième trou débouchant de borne et le troisième trou débouchant de borne de sorte qu'une partie de la broche d'électrode est disposée sur une surface de la plaque de capuchon orientée à l'opposé de l'ensemble d'électrodes, une partie de la broche d'électrode est insérée dans les premier, deuxième et troisième trous débouchants de borne, et une partie de la broche d'électrode se verrouille avec la saillie de la plaque de borne.
